# EUROPEAN PATENT APPLICATION

(11) **EP 4 530 457 A1**
(43) Date of publication of application: **02.04.2025**
(21) Application number: 24202042.8
(22) Date of filing: 23.09.2024
(51) Int. Cl.: F02C 7/14, F02C 7/224, F02C 7/236, F02K 3/10

(54) **DUAL VARIABLE DISPLACEMENT PUMP FUEL SYSTEM WITH COOLING BYPASS**

(30) Priority: 29.09.2023 US 202318374805
(71) Applicant: Hamilton Sundstrand Corporation, Charlotte, NC 28217-4578 (US)
(72) Inventor: SUSCA, Ryan Prescott, Windsor, CT, 06095 (US); SHOOK, Ryan, Walla Walla, WA, 99362 (US)
(74) Representative: Dehns

(57) **Abstract**

A system includes an actuation pump sub-system (APS) with an inlet configured to feed fuel from a fuel source into the actuation pump sub-system, a first outlet configured for connecting the actuation pump sub-system in fluid communication with an actuation system to supply fuel flow for actuation, and a second outlet. A fuel oil cooler (FOC) is in a supply line that is in fluid communication with the second outlet. A bypass valve (BPV) is in the supply line, in parallel with the FOC, and is configured to allow flow through the supply line bypassing the FOC. A main pump and control sub-system (MPCS) has a main inlet connected in fluid communication with the supply line downstream of the BPV and FOC, and a main outlet for supplying fuel to a downstream gas generator.

## Description

### BACKGROUND

### 1. Field

The present disclosure relates to fuel systems, and more particularly to fuel systems for aircraft.

### 2. Description of Related Art

In modern aircraft it would be advantageous to eliminate the thermal recirculation system. This would reduce the number of fuel system components, and free space for carrying more fuel. However, thermal recirculation cannot typically be eliminated because the fuel oil coolers (FOC) in typical aircraft have over-temperature heat loads at low burn flow conditions, necessitating thermal recirculation systems.

The conventional techniques have been considered satisfactory for their intended purpose. However, there is an ever present need for improved systems and methods for handling heat loads in fuel systems. This disclosure provides a solution for this need.

### SUMMARY

A system includes an actuation pump sub-system (APS) with an inlet configured to feed fuel from a fuel source into the actuation pump sub-system, a first outlet configured for connecting the actuation pump sub-system in fluid communication with an actuation system to supply fuel flow for actuation, and a second outlet. A fuel oil cooler (FOC) is in a supply line that is in fluid communication with the second outlet. A bypass valve (BPV) is in the supply line, in parallel with the FOC, and is configured to allow flow through the supply line bypassing the FOC. A main pump and control sub-system (MPCS) has a main inlet connected in fluid communication with the supply line downstream of the BPV and FOC, and a main outlet for supplying fuel to a downstream gas generator.

The system can be devoid of a thermal recirculation system. The system can include the gas generator connected in fluid communication with the main outlet of the MPCS. The system can include the actuation system connected in fluid communication with the first outlet of the APS. A gearbox can be connected to drive one or more fuel pumps in the APS, and to drive one or more pumps of the MPCS. An afterburner pump can be operatively connected to be driven by the gearbox, wherein the afterburner pump is connected in fluid communication to supply an afterburner control.

The APS can include a boost pump operatively connected between the inlet of the APS and the second outlet of the APS for boosting pressure of fuel from the supply to the pressure in the supply line. The APS can include a first variable displacement pump (VDP) with a pump inlet in fluid communication to be supplied with boosted pressure from the boost pump, and a pump outlet connected in fluid communication with the first outlet of the APS. An afterburner selector valve (ASV) can be included in a line connecting the pump outlet of the first VDP with the outlet of the APS, wherein the ASV is connected in fluid communication with a line connecting between the afterburner pump and the afterburner control for backup supply to the afterburner control from the APS. The APS can include a port connected in fluid communication with the outlet of the boost pump, wherein the port is connected in fluid communication with the actuation systems, with the afterburner pump, and with a port of the MPCS.

The MPCS can include a second VDP with a pump inlet in fluid communication with the main inlet of the MPCS, and a pump outlet line in fluid communication with the main outlet of the MPCS. A windmill bypass valve (WMBV) can be included in fluid communication with a branch of the pump outlet line and with the port of the APS for returning bypass flow to the APS from the second VDP. A metering valve (MV) in the pump outlet line can be configured for metering flow to the gas generator. A main pump shut off valve (MPSOV) in the pump outlet line downstream of the MV can be configured to stop flow out of the MPCS for shutoff.

A coarse and wash screens component can be included in the pump outlet line upstream of the WMBV and MV. A main filter can be included in a line connecting the boost pump to the second outlet of the APS. An actuation filter can be included in the line connecting the pump outlet of the first VDP with the outlet of the APS.

A controller can be operatively connected to control the BPV, the first and second VDPs, the MPSOV, the WMBV, the MV, the PCV, and the ASV. The controller can be operatively connected to sensors in the MPCS and APS for feedback in controlling the BPV, the first and second VDPs, the MPSOV, the WMBV, the MV, the PCV, and the ASV.

A method of controlling heat transfer in a fuel oil cooler (FOC) includes flowing fuel into an inlet of the FOC, through the FOC, and out an outlet of the FOC to absorb heat from oil flowing through the FOC while the oil has a temperature above a pre-determined overcooling limit. The method includes bypassing the FOC through a bypass valve connected in fluid communication with the inlet and the outlet in parallel with the FOC when the burn flow exceeds oil cooling demand to avoid overcooling the oil beyond a predetermined overcooling limit. Bypassing the FOC can be performed aboard an aircraft without flowing any fuel through any thermal recirculation system of the aircraft.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

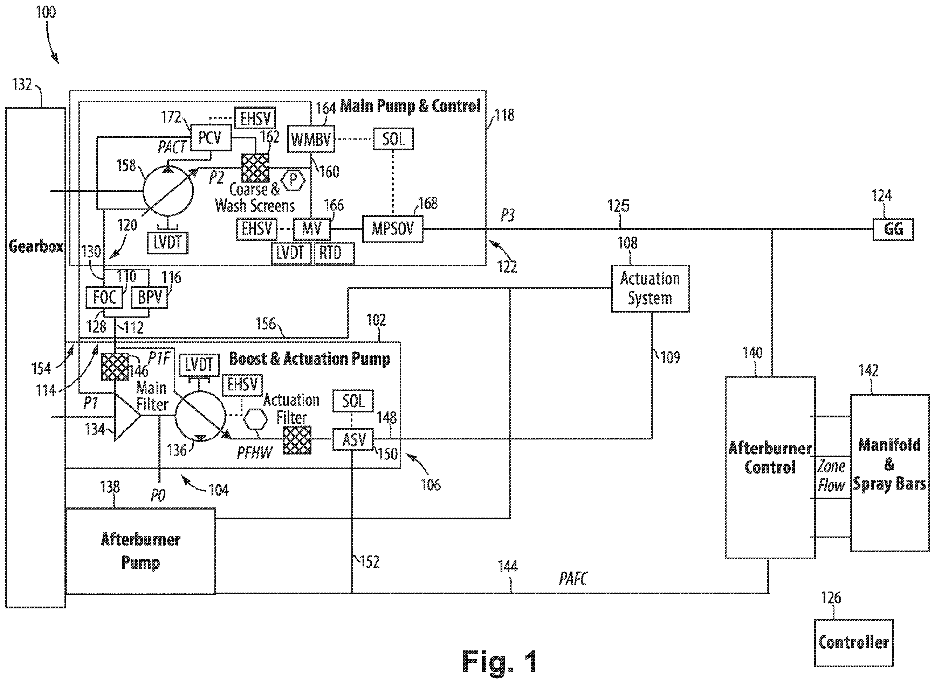

Fig. 1 is a schematic perspective view of an embodiment of a system constructed in accordance with the present disclosure, showing the dual variable displacement pumps, the fuel oil cooler (FOC), and the bypass valve for bypassing the FOC.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. The systems and methods described herein can be used to eliminate the need for fuel thermal recirculation system, by pairing a thermally efficient fuel system with the ability to modulate fuel flow to the fuel oil cooler (FOC) to prevent overcooling engine oil.

The system 100 includes an actuation pump sub-system (APS) 102 with an inlet 104 configured to feed fuel from a fuel source, e.g. at pressure P0, into the APS 102, a first outlet 106 configured for connecting the APS 102 in fluid communication with an actuation system 108 to supply fuel flow for actuation such as for end effectors aboard an aircraft through a line 109. A fuel oil cooler (FOC) 110 is in a supply line 112 that is in fluid communication with the second outlet 114 of the APS 102. A bypass valve (BPV) 116 is in the supply line 112 in parallel with the FOC 110. A main pump and control sub-system (MPCS) 118 has a main inlet 120 connected in fluid communication with the supply line 112 downstream of the BPV 116 and FOC 110. The MPCS 118 includes a main outlet 122 for supplying fuel to a downstream gas generator (GG) 124 through a line 125, e.g. at elevated pressure P3. The gas generator (GG) can include fuel injectors in a combustor of a gas turbine engine.

The BPV 116 is configured to allow flow through the supply line 112, bypassing the FOC 110. Active control BPV 116, e.g. by the controller 126, can take 0-70% of total flow through the supply line 114, so the system 100 can be devoid of a thermal recirculation system. A method of controlling, e.g. by the controller 128, heat transfer in the (FOC) 110 includes flowing fuel into an inlet 128 of the FOC 110, through the FOC 110, and out an outlet 130 of the FOC 110 to absorb heat from oil flowing through the FOC 110 while the oil has a temperature above a pre-determined overcooling limit. The method includes bypassing the FOC 110 through a BPV 116 connected in fluid communication with the inlet 128 and the outlet 130 in parallel with the FOC 110 when burn flow of fuel for a particular engine operating condition exceeds oil cooling demand, to avoid overcooling the oil beyond a predetermined overcooling limit. This also helps avoid overheating fuel in heat exchange with the oil without needing a thermal recirculation system on the aircraft. In this manner, bypassing the FOC 110 can be performed aboard an aircraft without flowing any fuel through any thermal recirculation system of the aircraft. If the operation of the BPV 116 can be properly tuned to the predetermined overcooling limit, the BPV 116 can be configured for passive operation as the controller 126 operates the MPCS 118 and the AFS 102.

A gearbox 132 is connected to drive one or more fuel pumps 134, 136 in the APS 102, and to drive one or more pumps 136 of the MPCS 118. An afterburner pump 138 is also operatively connected to be driven by the gearbox 132. The afterburner pump 138 is connected in fluid communication to receive flow from the supply line 114 via line 115 and to supply an afterburner control 140, which controls flow of fuel to the manifold and spray bars 142 of an afterburner system of the gas turbine engine of the aircraft. The line 144 that connects the afterburner pump 138 in fluid communication with the afterburner control 140 can be pressurized to the elevated pressure, PAFC.

The APS 102 includes a boost pump 134 operatively connected between the inlet 104 of the APS and the second outlet 114 for boosting pressure of fuel from the supply at P0 to the pressure in the supply line 116, P1. A main filter 146 is included in the line connecting the boost pump 134 to the second outlet of the APS 114. The APS 102 includes a first variable displacement pump (VDP) 136 with a pump inlet in fluid communication to be supplied with filtered, boosted pressure P1F from the boost pump 134, downstream of the main wash filter 146, and a pump outlet connected in fluid communication by a line 148 with the first outlet 106 of the APS 102. An afterburner selector valve (ASV) 150 is included in the line 148. An actuation filter 170 is included in the line 148 upstream of the ASV 150. The ASV 150 is connected in fluid communication with a line 152 connecting to the line 144 of the afterburner pump 138 for backup supply to the afterburner control 140 from the APS 102. The APS 102 includes a port 154 connected in fluid communication with the outlet of the boost pump 134, wherein the port 154 is connected in fluid communication with the actuation systems 108, with the afterburner pump 138, and with a port of the MPCS 118 via a branching line 156 that returns flow from the WMBV 1164, from the actuation system 108, and from the afterburner pump 138, to the boost outlet.

The MPCS 118 includes a second VDP 158 with a pump inlet in fluid communication with the main inlet 120 of the MPCS 118, and a pump outlet line 160 in fluid communication with the main outlet 122 of the MPCS 118. A coarse and wash screens component 162 is included in the pump outlet line 160 upstream of the WMBV 164 and MV 166. A windmill bypass valve (WMBV) 164 is in fluid communication with a branch of the pump outlet line 160 and with the port 154 of the APS 102 for returning bypass flow to the APS 102 from the second VDP 158. A metering valve (MV) 166 in the pump outlet line 160 is configured for metering flow to the gas generator 124. A main pump shut off valve (MPSOV) 168 in the pump outlet line 160 downstream of the MV 166 is configured to stop flow out of the MPCS 118 for shutoff.

The controller 126 is operatively connected to control the BPV 116 (if it is actively controlled), the first and second VDPs 136, 158, the MPSOV 168, the WMBV 164, the MV 166, the pressure control valve (PCV) 172, and the ASV 150, e.g. by electrically controlling the electrohydraulic servo valves (EHSVs) and solenoids (SOLs) indicated in Fig. 1. The PCV 172 controls the variable displacement mechanism of the VDP 158, whereas the VDP 136 can have its variable displacement mechanism controlled directly by an EHSV. The controller 126 is operatively connected to sensors, including the linear variable differential transformers LVDTs, resistance thermometer RTD, and pressure sensors P, in the MPCS 118 and APS 102 for feedback in controlling the BPV 116 (if it is actively controlled), the first and second VDPs 136, 158, the MPSOV 168, the WMBV 164, the MV 166, the PCV 172, and the ASV 150. The controller can include machine readable instructions in the form of analog circuits, solid state digital logic, or a processor can read the instructions to carry out the methods disclosed herin.

Systems and methods as disclosed herein provide various potential benefits including the following. They can eliminates thermal recirculation systems on aircraft. They can improve fuel system reliability. They can reduce fuel system weight/envelope, and can allow aircraft to carry more fuel.

The methods and systems of the present disclosure, as described above and shown in the drawings, provide for eliminating the need for fuel thermal recirculation system, by pairing a thermally efficient fuel system with the ability to modulate fuel flow to the fuel oil cooler (FOC) to prevent overcooling engine oil. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system comprising:
an actuation pump sub-system "APS" (102) with an inlet (104) configured to feed fuel from a fuel source into the APS, a first outlet (106) configured for connecting the APS in fluid communication with an actuation system to supply fuel flow for actuation, and a second outlet;
a fuel oil cooler "FOC" (110) in a supply line that is in fluid communication with the second outlet;
a bypass valve "BPV" (116) in the supply line, in parallel with the FOC configured to allow flow through the supply line bypassing the FOC; and
a main pump and control sub-system "MPCS" (118) with a main inlet connected in fluid communication with the supply line downstream of the BPV and FOC, and a main outlet for supplying fuel to a downstream gas generator (124).

2. The system as recited in claim 1, wherein the system is devoid of a thermal recirculation system.

3. The system as recited in claim 1 or 2, further comprising:
the gas generator (124) connected in fluid communication with the main outlet of the MPCS; and
the actuation system connected in fluid communication with the first outlet of the APS (102).

4. The system as recited in any preceding claim, further comprising a gearbox (132), wherein the gearbox is connected to drive one or more fuel pumps in the APS, and to drive one or more pumps of the MPCS.

5. They system as recited in any preceding claim, further comprising an afterburner pump operatively connected to be driven by the gearbox, wherein the afterburner pump is connected in fluid communication to supply an afterburner control.

6. The system as recited in claim 5, wherein the APS includes a boost pump operatively connected between the inlet of the APS and the second outlet of the APS for boosting pressure of fuel from the supply to the pressure in the supply line.

7. The system as recited in claim 6, wherein the APS includes a first variable displacement pump "VDP" with a pump inlet in fluid communication to be supplied with boosted pressure from the boost pump, and a pump outlet connected in fluid communication with the first outlet of the APS.

8. The system as recited in claim 7, further comprising an afterburner selector valve "ASV" in a line connecting the pump outlet of the first VDP with the outlet of the APS, wherein the ASV is connected in fluid communication with a line connecting between the afterburner pump and the afterburner control for backup supply to the afterburner control from the APS.

9. The system as recited in claim 8, wherein the APS includes a port connected in fluid communication with the outlet of the boost pump, wherein the port is connected in fluid communication with the actuation systems, with the afterburner pump, and with a port of the MPCS, and optionally wherein the MPCS includes a second VDP with a pump inlet in fluid communication with the main inlet of the MPCS, and a pump outlet line in fluid communication with the main outlet of the MPCS.

10. The system as recited in claim 9, further comprising a windmill bypass valve "WMBV" in fluid communication with a branch of the pump outlet line and with the port of the APS for returning bypass flow to the APS from the second VDP.

11. The system as recited in claim 10, further comprising a metering valve "MV" in the pump outlet line, configured for metering flow to the gas generator, and optionally further comprising a main pump shut off valve "MPSOV" in the pump outlet line downstream of the MV, configured to stop flow out of the MPCS for shutoff.

12. The system as recited in claim 11, further comprising a coarse and wash screens component in the pump outlet line upstream of the WMBV and MV.

13. The system as recited in claim 11, further comprising a main filter in a line connecting the boost pump to the second outlet of the APS, or further comprising an actuation filter in the line connecting the pump outlet of the first VDP with the outlet of the APS, or further comprising a controller operatively connected to control the BPV, the first and second VDPs, the MPSOV, the WMBV, the MV, the PCV, and the ASV, and optionally wherein the controller is operatively connected to sensors in the MPCS and APS for feedback in controlling the BPV, the first and second VDPs, the MPSOV, the WMBV, the MV, the PCV, and the ASV.

14. A method of controlling heat transfer in a fuel oil cooler "FOC" comprising:
flowing fuel into an inlet of the FOC, through the FOC, and out an outlet of the FOC to absorb heat from oil flowing through the FOC while the oil has a temperature above a pre-determined overcooling limit; and
bypassing the FOC through a bypass valve connected in fluid communication with the inlet and the outlet in parallel with the FOC when the burn flow exceeds oil cooling demand to avoid overcooling the oil beyond a predetermined overcooling limit.

15. The method as recited in claim 14, wherein bypassing the FOC is performed aboard an aircraft without flowing any fuel through any thermal recirculation system of the aircraft.
